# EUROPEAN PATENT SPECIFICATION

(11) **EP 3 376 854 B1**
(45) Date of publication and mention of the grant of the patent: **06.01.2021**
(21) Application number: 16798156.2
(22) Date of filing: 17.11.2016
(51) Int. Cl.: B01F 15/00, A01J 25/06, B01F 7/04

(54) **APPARATUS FOR PRODUCING A FOOD PRODUCT**
VORRICHTUNG ZUR HERSTELLUNG EINES LEBENSMITTELPRODUKTS
APPAREIL DE PRODUCTION D'UN PRODUIT ALIMENTAIRE

(30) Priority: 20.11.2015 SE 1551505
(43) Date of publication of application: 26.09.2018
(73) Proprietor: Tetra Laval Holdings & Finance S.A., 1009 Pully (CH)
(72) Inventor: OLSON, Michael, Montrose, MN 55363 (US)
(74) Representative: Tetra Pak - Patent Attorneys SE
(86) International application number: PCT/EP2016/078056
(87) International publication number: WO 2017/085211

(56) References cited:
- EP-A1- 0 328 294
- JP-A- S 571 430
- US-A- 444 470
- US-A- 3 541 687
- US-A- 3 924 835

## Description

### TECHNICAL FIELD

The present invention relates to the field of food production apparatuses.

### BACKGROUND

Apparatuses used in the food processing industry include vats for cheese processing of the type disclosed in US 5985347. This vat has a space for holding cheese curd formed by two opposite end walls and a generally cylindrical wall arranged therebetween. Two agitator panels for mixing the cheese curd are rotatably mounted to the end walls. Some other prior art is reflected by patent documents US3541687A, US444470A, US3924835A, JP57001430A and EP0328294A1.

Many technical challenges must be addressed when designing apparatuses for producing cheese curd and other food products that need to be stirred during processing. There is a need for continued technological development and innovation in this area, in particular with the aim of improving end-product quality.

### SUMMARY

According to the invention, the apparatus according to claim 1 for producing a food product comprises: an enclosed vessel for holding the food product, the vessel having a first end wall, a second end wall opposite to the first end wall, and a side wall between the first and second end walls; a first agitator rotatably mounted to the first end wall, the first agitator extending inside the vessel towards the second end wall; and a second agitator rotatably mounted to the second end wall, the second agitator extending inside the vessel towards the first end wall. The first agitator is unsupported by the second end wall, and the second agitator is unsupported by the first end wall. The sidewall is convex and an outlet is arranged at a lower cross-sectional apex of the sidewall. The sidewall comprises two frustoconical portions, the base ends of the frustoconical portions facing each other.

By the vessel being "enclosed" is meant that the vessel is adapted to hold a liquid. This is not meant to exclude the presence of openings which may or may not be closable and which allow matter to be introduced and removed from the interior of the vessel.

The apparatus may for example be used for producing dairy food products such as cheese curd. However, the apparatus may be used for producing many other types of food products the production of which involves operations such as stirring, mixing and/or cutting. The fact that the first and second agitators are supported by only a respective one of the first and second end walls eliminates the need for a support bearing at their far ends. Internal bearings are unsanitary, and reducing the number of them may improve the quality of the end product.

According to an example embodiment, the first and second agitators are rotatable independently from each other. This provides for an improved agitator action, something which may result in higher end-product quality and also in reduced production times. For example, with reference to cheese curd production, the time of the rennet injection step may be reduced and a more uniform coagulum of curd may be obtained.

According to an example embodiment, the first and second agitators are rotatable at different rotational speeds from each other and/or rotatable in opposite directions to each other. These types of rotations help to improve the agitator action since there is less need to continually speed up the first and second agitators in order to "chase" a swirling mass during stirring or cutting. In other words, with this agitator design it may be possible to avoid situations such as those where one is trying to cut a coagulum which starts to swirl and one must chase after it trying to cut. These types of rotations also help to produce more turbulence which increases heat transfer between heat transfer surfaces (i.e. the vessel and the mass inside the vessel). This results in a more efficient cooking step when producing cheese curd, for instance. Also, this agitator design renders the agitators multifunctional in that it possible to cut in one direction and stir in the other.

According to an example embodiment, the first and second agitators are coaxial and coaxially displaced. By having dual and directly opposing agitators, a mass can be cut at slower agitator speeds without setting the mass into a swirling motion. Moreover, by arranging the first and second agitators in this way it is possible to give the vessel a simple shape which is inexpensive to manufacture and also helps to improve the sweeping action of the first and second agitators by minimizing "dead spots".

According to an example embodiment, each of the first and second agitators extends less than approximately halfway between the first and second walls. The idea here is usually that the first and second agitators should extend as far as possible into the vessel without touching or overlapping so that dead spots between them are minimized. Further, arranging the first and second agitators so that their sweeping actions do not overlap helps to improve the operational reliability of the apparatus because there is a reduced risk that the first and second agitators collide if one of them gets stuck.

According to the invention, the sidewall is convex and an outlet is arranged at a lower cross-sectional apex of the sidewall. It is then possible to have the outlet located at the vertically lowest point of the vessel while the vessel is aligned with the horizontal plane. This facilitates draining of the vessel since the need to pitch the vessel to one end to empty is eliminated. Moreover, a larger percentage of the vessel's volume may be used for food product processing compared to vessels that in order to be drained cannot sit level but must be arranged at an angle with respect to the horizontal plane. It should also be noted that in some cases the first and second agitators may be used to push the food product to the outlet, whereby draining of the vessel is further facilitated. One way to make this possible includes having the first and second agitators capable of counter rotating and the outlet arranged between the first and second agitators.

According to the invention, the sidewall comprises two frustoconical portions, the base ends of the frustoconical portions facing each other. This results in the sidewall having a simple convex shape that may be produced by relatively inexpensive manufacturing techniques and that helps to minimize dead spots.

According to an example embodiment, the apparatus further comprises a heating jacket arranged in thermal contact with the exterior of the vessel. Providing the apparatus with a heating jacket increases its versatility by allowing a food product to be heated.

### BRIEF DESCRIPTION OF THE DRAWINGS

The present invention will now be described in further detail with reference to the appended drawings in which:
Figure 1 is a schematic side view of an example embodiment of an apparatus for producing a food product;
Figure 2 is a schematic top view of the apparatus in Figure 1; and
Figure 3 is another schematic side view of the apparatus in Figure 1.

### DETAILED DESCRIPTION OF THE DRAWINGS

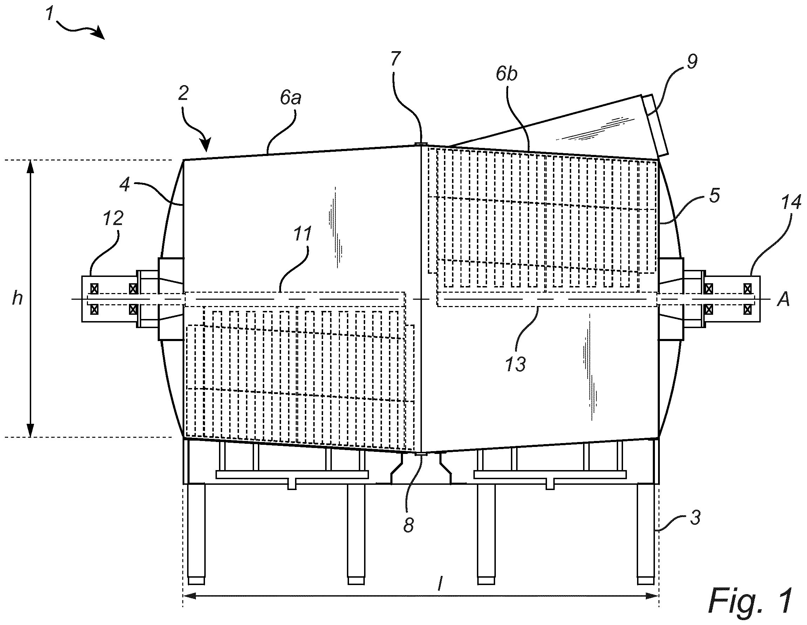

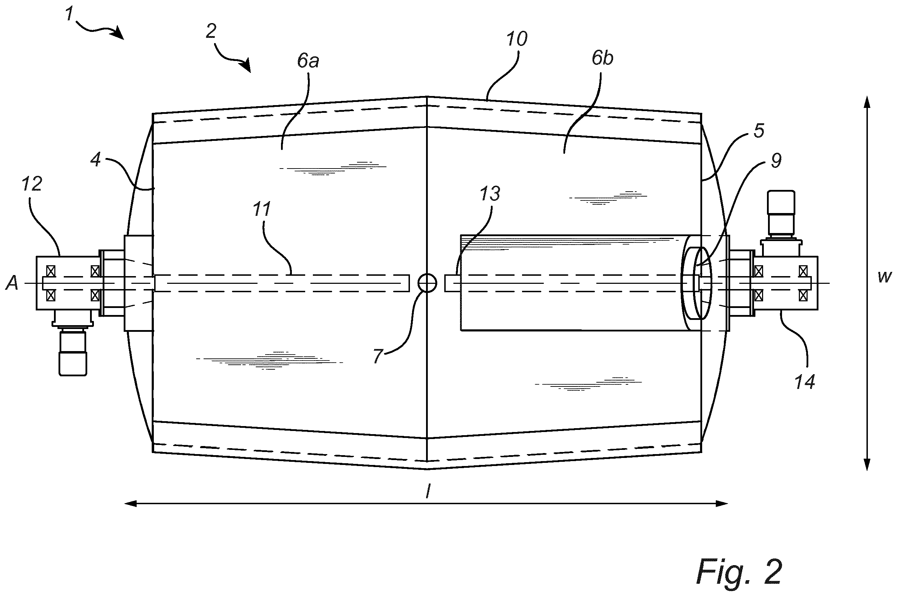

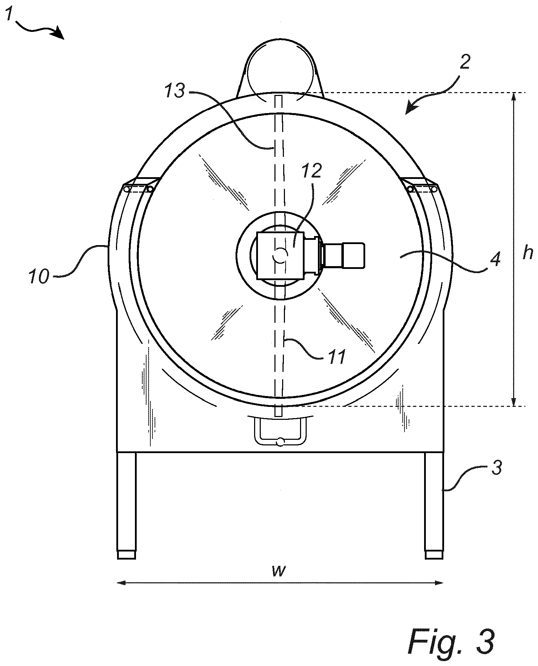

Figures 1 to 3 show an apparatus 1 for processing cheese curd. The apparatus 1 has a vessel 2 which may alternatively be referred to as a vat or a storage tank. The vessel 2 forms an enclosure adapted for the processing of ingredients to produce food products. In the illustrated example, the vessel 2 is supported by a support structure 3. When the apparatus is in its operative position, as in Figures 1 to 3, the vessel 2 has a horizontal length I, a horizontal width w perpendicular to the length I and a vertical height h. These dimensions may vary greatly between applications. Usually, the size of the vessel 2 is such that the vessel 2 is capable of holding somewhere in the range from about 13000 litres to about 27000 litres. The vessel 2 is typically mostly made of a metal, such as stainless steel.

The vessel 2 has a first end wall 4 and a second end wall 5 which is arranged opposite to the first end wall 4. The first and second end walls 4, 5 are substantially alinged with the vertical and horizontally separated from each other. The shape of the first end wall 4 is similar to that of the second end wall 5. In this example, the first and second end walls 4, 5 are substantially flat and, when viewed in the lengthwise direction of the vessel 2, substantially circular.

A sidewall 6a, 6b extends from the first end wall 4 to the second end wall 5, thus connecting the first and second end walls 4, 5 to each other. The first end wall 4, the second side wall 5 and the sidewall 6a, 6b are integrated with each other, either formed as one piece or as several separate pieces attached together. The sidewall 6a, 6b has a generally cylindrical shape. The cross section of the sidewall 6a, 6b, when viewed in the lengthwise direction of the vessel 2, is substantially circular. In the illustrated example, the cross section decreases towards the first and second end walls 4, 5 so that the sidewall 6a, 6b has a convex shape when viewed in the direction of the width w of the vessel 2. This means that the sidewall 6a, 6b is tapered from the middle to the ends where the first and second end walls 4, 5 are arranged. The sidewall 6a, 6b may be regarded as having a first frustoconical portion 6a and a second frustoconical portion 6b which are open at their top and base ends. The frustoconical portions 6a, 6b are joined by their respective base ends, and the first and second end walls 4, 5 are arranged at the respective top ends of the frustoconical portions 6a, 6b. When viewed in the direction of the width w, the sidewall 6a, 6b has two cross-sectional apexes disposed vertically opposite to each other.

The sidewall 6a, 6b is provided with an inlet 7 and an outlet 8. The inlet 7 allows for ingredients to be introduced into the vessel 2, and the outlet 8 allows for a food product to be removed from the vessel 2 after processing. The outlet 8 is closable, and the inlet 7 may or may not be closable. The outlet 8 has a central position. More precisely, the outlet 8 is located at the lower cross-sectional apex of the sidewall 6a, 6b. The inlet 7 is located vertically opposite to the outlet 8. The inlet 7 and outlet 8 may of course be differently arranged in other examples.

The vessel 2 is provided with an access door 9 through which an operator can access the interior of the vessel 2. A heating jacket 10 is arranged around a part of the side wall 6a, 6b so as to be in thermal contact with the side wall 6a, 6b. The heating jacket 10 is a steam jacket through which hot steam may be circulated to heat the interior of the vessel 2. Of course, the heating jacket 10 may be a different type of heating jacket in other examples, such as a hot water jacket.

The vessel 2 has a first agitator 11 for stirring, mixing and/or cutting a food product being processed by the apparatus 1. The first agitator 11 is rotatably mounted to the first wall 4, approximately by the center of the first wall 4, and connected to a first motor 12 or similar device capable of driving the first agitator 11. The first agitator 11 projects towards the second end wall 5, slightly less than halfway into the interior of the vessel 2 . The first agitator 11 comprises a straight shaft integrated with several pointed parts extending radially from the shaft. The design of the first agitator 11 may be different in other examples. The first agitator 11 may be releasably mounted so that different types of first agitators 11 can be used, depending on the food product to be produced and/or the required type of operating action (mixing, stirring, cutting, etc.).

The vessel 2 has a second agitator 13 which is similar to, and similarly arranged as, the first agitator 11 except for being rotatably mounted to the second end wall 5 and unsupported by the first end wall 4. Accordingly, the second and first agitators 11, 13 are oppositely arranged inside the vessel 2 along a common geometrical axis A. Accordingly, the first and second axis 11, 13 are displaced relative to each other along the geometrical axis A. The geometrical axis A lie in the horizontal plane and passes approximately through the centers of the first and second end walls 4, 5. The second agitator 13 is drivable by a second motor 14. The first and second agitators 11, 13 are in this example rotatable independently from each other. This may or may not be the case in other examples. Also, in other examples, the same motor may drive both of the first agitator 11 and the second agitator 13

The process of manufacturing cheese curd is deemed to be known to the person skilled in the art and need not be detailed herein. However, in short, cheese curd can be manufactured using the apparatus 1 as follows. Ingredients such as milk and rennet are initially introduced into the vessel 2 through the inlet 7. The ingredients are stirred by the rotating first and second agitators 11, 13 and cooked by the circulation of hot steam through the heat jacket 10. The coagulum of cheese curd thus formed is cut into small pieces and released from the vessel 2 by opening the outlet 8.

The person skilled in the art realizes that the present invention by no means is limited to the above-described example embodiment. Many modifications and variations are possible within the scope of the appended claims. For example, the heating jacket 10 may be omitted if the ingredients do not need to be heated or if they are heated in some other way, such as by the introduction hot water into the vessel 2.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. Apparatus (1) for producing a food product, comprising an enclosed vessel (2) for holding the food product, the vessel (2) having a first end wall (4), a second end wall (5) opposite to the first end wall (4), and a side wall (6a, 6b) between the first and second end walls (4, 5);
a first agitator (11) rotatably mounted to the first end wall (4), the first agitator (11) extending inside the vessel (2) towards the second end wall (5); and
a second agitator (13) rotatably mounted to the second end wall (5), the second agitator (13) extending inside the vessel (2) towards the first end wall (4);
wherein the first agitator (11) is unsupported by the second end wall (5), and wherein the second agitator (13) is unsupported by the first end wall (4), **characterized in that**
the sidewall (6a, 6b) is convex, and wherein an outlet (8) is arranged at a lower cross-sectional apex of the sidewall (6a, 6b), wherein
the sidewall (6a, 6b) comprises two frustoconical portions, the base ends of the frustoconical portions facing each other.

2. The apparatus (1) according to claim 1, wherein the first and second agitators (11, 13) are rotatable independently from each other.

3. The apparatus (1) according to claim 1 or 2, wherein the first and second agitators (11, 13) are rotatable at different rotational speeds from each other.

4. The apparatus (1) according to any of the preceding claims,
wherein the first and second agitators (11, 13) are rotatable in opposite directions to each other.

5. The apparatus (1) according to any of the preceding claims,
wherein the first and second agitators (11, 13) are coaxial and coaxially displaced.

6. The apparatus (1) according to any of the preceding claims,
wherein each of the first and second agitators (11, 13) extends less than approximately halfway between the first and second walls (4, 5).

7. The apparatus (1) according to any one of the preceding claims, further comprising a heating jacket (10) arranged in thermal contact with the exterior of the vessel (2).

## Patentansprüche

1. Vorrichtung (1) zur Herstellung eines Lebensmittelprodukts, umfassend:
einen geschlossenen Behälter (2) zur Aufnahme des Lebensmittelprodukts, wobei der Behälter (2) eine erste Endwand (4), eine zweite Endwand (5) gegenüber der ersten Endwand (4) und eine Seitenwand (6a, 6b) zwischen der ersten und der zweiten Endwand (4, 5) aufweist;
eine erste Rührvorrichtung (11), die drehbar an der ersten Endwand (4) angebracht ist, wobei sich die erste Rührvorrichtung (11) innerhalb des Behälters (2) zu der zweiten Endwand (5) erstreckt; und
eine zweite Rührvorrichtung (13), die drehbar an der zweiten Endwand (5) angebracht ist, wobei sich die zweite Rührvorrichtung (13) innerhalb des Behälters (2) zu der ersten Endwand (4) erstreckt;
wobei die erste Rührvorrichtung (11) von der zweiten Endwand (5) nicht gestützt wird und wobei die zweite Rührvorrichtung (13) von der ersten Endwand (4) nicht gestützt wird, **dadurch gekennzeichnet, dass** die Seitenwand (6a, 6b) konvex ist, und wobei ein Auslass (8) an einem unteren Querschnittsscheitel der Seitenwand (6a, 6b) angeordnet ist, wobei die Seitenwand (6a, 6b) zwei kegelstumpfförmige Teile umfasst, wobei die Basisenden der kegelstumpfförmigen Teile einander zugekehrt sind.

2. Vorrichtung (1) nach Anspruch 1, wobei die erste und die zweite Rührvorrichtung (11, 13) unabhängig voneinander drehbar sind.

3. Vorrichtung (1) nach Anspruch 1 oder 2, wobei die erste und die zweite Rührvorrichtung (11, 13) mit voneinander verschiedenen Drehzahlen drehbar sind.

4. Vorrichtung (1) nach einem der vorhergehenden Ansprüche, wobei die erste und die zweite Rührvorrichtung (11, 13) in zueinander entgegengesetzten Richtungen drehbar sind.

5. Vorrichtung (1) nach einem der vorhergehenden Ansprüche, wobei die erste und die zweite Rührvorrichtung (11, 13) koaxial und koaxial versetzt sind.

6. Vorrichtung (1) nach einem der vorhergehenden Ansprüche, wobei sich jede von der ersten und der zweiten Rührvorrichtung (11, 13) um weniger als ungefähr die Hälfte zwischen der ersten und der zweiten Wand (4, 5) erstreckt.

7. Vorrichtung (1) nach einem der vorhergehenden Ansprüche, ferner umfassend einen Heizmantel (10), der in thermischem Kontakt mit der Außenseite des Behälters (2) angeordnet ist.

## Revendications

1. Appareil (1) pour produire un produit alimentaire, comprenant :
un récipient fermé (2) pour contenir le produit alimentaire, ce récipient (2) ayant une première paroi d'extrémité (4), une deuxième paroi d'extrémité (5) en face de la première paroi d'extrémité (4), et une paroi latérale (6a, 6b) entre la première et la deuxième paroi d'extrémité (4, 5) ;
un premier agitateur (11) monté de manière rotative sur la première paroi d'extrémité (4), ce premier agitateur (11) s'étendant à l'intérieur du récipient (2) vers la deuxième paroi d'extrémité (5) ; et
un deuxième agitateur (13) monté de manière rotative sur la deuxième paroi d'extrémité (5), ce deuxième agitateur (13) s'étendant à l'intérieur du récipient (2) vers la première paroi d'extrémité (4) ;
le premier agitateur (11) n'étant pas supporté par la deuxième paroi d'extrémité (5), et le deuxième agitateur (13) n'étant pas supporté par la première paroi d'extrémité (4), **caractérisé en ce que**
la paroi latérale (6a, 6b) est convexe, et un orifice de sortie (8) étant disposé à un sommet inférieur de la section transversale de la paroi latérale (6a, 6b),
la paroi latérale (6a, 6b) comportant deux parties tronconiques, les extrémités de la base de ces parties tronconiques étant en face l'une de l'autre.

2. Appareil (1) selon la revendication 1, dans lequel le premier et le deuxième agitateur (11, 13) peuvent tourner indépendamment l'un de l'autre.

3. Appareil (1) selon la revendication 1 ou 2, dans lequel le premier et le deuxième agitateur (11, 13) peuvent tourner à des vitesses de rotation différentes l'un par rapport à l'autre.

4. Appareil (1) selon l'une quelconque des revendications précédentes, dans lequel le premier et le deuxième agitateur (11, 13) peuvent tourner dans des sens opposés l'un par rapport à l'autre.

5. Appareil (1) selon l'une quelconque des revendications précédentes, dans lequel le premier et le deuxième agitateur (11, 13) sont coaxiaux et sont déplacés coaxialement.

6. Appareil (1) selon l'une quelconque des revendications précédentes, dans lequel chacun du premier et du deuxième agitateur (11, 13) s'étend moins qu'environ à mi-chemin entre la première et la deuxième paroi (4, 5).

7. Appareil (1) selon l'une quelconque des revendications précédentes, comprenant en outre une chemise de réchauffage (10) disposée en contact thermique avec l'extérieur du récipient (2).
